Europäisches Patentamt

European Patent Office

Office européen des brevets

(19)

(11) Veröffentlichungsnummer: **0 270 894 B1**

(12) **EUROPÄISCHE PATENTSCHRIFT**

(45) Veröffentlichungstag der Patentschrift: 06.03.91

(21) Anmeldenummer: 87117210.2

(22) Anmeldetag: 23.11.87

(51) Int. Cl.⁵: **H01M 8/24**

(54) **Batterien aus Methanol/Luft-Brennstoffzellen mit polymeren Elektrolyten hoher Energie- und Leistungsdichte und rohrförmiger Anordnung.**

(30) Priorität: 25.11.86 DE 3640209

(43) Veröffentlichungstag der Anmeldung:
15.06.88 Patentblatt 88/24

(45) Bekanntmachung des Hinweises auf die
Patenterteilung:
06.03.91 Patentblatt 91/10

(84) Benannte Vertragsstaaten:
AT BE CH DE FR GB LI NL SE

(56) Entgegenhaltungen:
CH-A- 655 615
FR-A- 1 585 403
US-A- 3 216 911
US-A- 3 508 970

(73) Patentinhaber: BASF Aktiengesellschaft
Carl-Bosch-Strasse 38
W-6700 Ludwigshafen(DE)

(72) Erfinder: Sterzel, Hans-Josef, Dr.
Wasgauring 3
W-6701 Dannstadt-Schauernheim(DE)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine Batterie aus Methanol/Luft-Brennstoffzellen, die ihrerseits aus einer Kathode, einer Anode und einer $CO_2$-permeablen Anionenaustauscher-Membran als Elektrolyt aufgebaut sind, bei der Kathode und Anode sich auf einem gemeinsamen Stromableiter befinden, der als Kegel mit geringem Öffnungswinkel ausgebildet ist und mehrere Kegel auf einem Rohr zu einer Batterie ineinandergesteckt angeordnet sind.

In Brennstoffzellen wird ein Brennstoff, in diesem Fall Methanol, an einer Anode elektrochemisch zu Kohlendioxid und Wasser oxidiert, während an einer Kathode Luftsauerstoff zu Hydroxylionen (OH-) reduziert wird. Anode und Kathode sind durch einen Elektrolyten, bei Batterien aus Methanol/Luft-Brennstoffzellen nach dieser Erfindung eine OH-Ionen leitende polymere Anionaustauscher-Membran getrennt. Werden Anode und Kathode über einen Verbraucher verbunden, so kommt ein Elektronenfluß von der Anode zur Kathode zustande.

Bis heute sind keine betriebsfähigen Batterien aus Methanol/Luft-Brennstoffzellen bekannt. Nach dem Stand der Technik wird Methanol katalytisch zu Kohlendioxid und Wasserstoff umgesetzt, das Kohlendioxid abgetrennt und der Wasserstoff der eigentlichen Wasserstoff/Luft-Brennstoffzelle zugeführt. Die dabei erzielten Stromdichten liegen um 0,2 bis 0,3 A/cm$^2$.

Höhere Stromdichten von 1 A/cm$^2$ lassen sich vor allem mit porösen, gasdurchlässigen Elektroden erzielen. Die Gasdurchlässigkeit ist vorteilhaft, da beim Betrieb der Brennstoffzelle Sauerstoff in die Kathode hineindiffundiert und Wasser und Kohlendioxid herausdiffundieren.

Solche Gasdiffusionselektroden werden z.B. von Watanabe et al (J. Electroanal. Chem., 183 (1985), 391-394) beschrieben. Diese Elektroden werden durch Sintern von Ruß zusammen mit Rußteilchen, die mit Katalysator bedeckt sind und gegebenenfalls Polytetrafluorethylen-Teilchen um einen geeigneten Ableiter hergestellt. Die erhaltene Elektrode besteht aus einem porösen Netzwerk, in welchem sich die Katalysatorteilchen unter Ausbildung eines Percolationsnetzwerkes berühren.

Als Percolationsnetzwerk ist dabei zu verstehen, daß eine ständige Verbindung zwischen den Katalysatorteilchen vorhanden ist, d.h. die Katalysatorteilchen sich berühren.

Als Katalysatoren für die Reduktion des Sauerstoffs werden üblicherweise Edelmetalle wie Platin oder Silber, um nur einige zu nennen, verwendet.

Kostengünstigere Kathoden, in denen die Verwendung von teuren Edelmetallen vermieden wird, lassen sich aus speziellen Polymeren, die Übergangsmetalle enthalten, wie sie in der EP-A-154 247 beschrieben werden, herstellen.

Zur Herstellung einer Kathode aus den dort beschriebenen Polymeren verwendet man als Ableiter vorzugsweise ein engmaschiges Drahtnetz, insbesondere aus rostfreiem Stahl oder Kupfer. Die Maschenweiten betragen in der Regel 0,02 bis 0,5 mm und die freie Fläche macht mindestens 20 % der Gesamtfläche aus. Dieser Ableiter wird dann mit einem unvernetzten Polymeren, wie es in der EP-A 154 247 beschrieben wird, überzogen.

Zur Herstellung der katalytisch wirksamen Masse wird Ruß mit hohen spezifischen Oberflächen (beispielsweise im Bereich von 200 bis 500 m$^2$/g) durch Oxidation in Luft bei ca. 600°C und nachträgliche Behandlung mit siedender Salpetersäure wasserbenetzbar gemacht. Anschließend wird dieser Ruß mit einer verdünnten Lösung des Polymeren getränkt, getrocknet und mit Polytetrafluorethylenpulver gut vermischt und bei 150 bis 200°C um einen entsprechenden Ableiter so verpreßt, daß offene Mikroporen und Kanäle erhalten bleiben.

Als besonders vorteilhaft haben sich poröse Kathoden erwiesen, in denen eine Schicht eines Anionenaustauschers-Polymeren abgeschieden worden ist. Diese Schicht ist im allgemeinen 0,01 bis 1 $\mu$m, vorzugsweise 0,05 bis 0,5 $\mu$m dick und kann vom Aufbau her, der als Festelektrolyt verwendeten Anionenaustauscher-Membran entsprechen oder auch davon verschieden sein.

Als Anionenaustauscher-Membranen können grundsätzlich alle kommerziell erhältlichen Membranen eingesetzt werden, deren Fest-Ionengehalt vorzugsweise im Bereich von 0,5 bis 5 Äquivalenten pro kg trockener Membran liegt.

Als Basispolymere für derartige Anionenaustauscher-Membranen eignen sich z.B. Copolymere, die durch Pfropfung von Vinylpyridinen auf Polytetrafluorethylen oder durch Chlormethylierung von mit Divinylbenzol vernetztem Polystyrol und anschließender Quaternierung mit tertiären Aminen erhältlich sind. Auch Copolymere aus Vinylbenzylchlorid und Divinylbenzol sind geeignet. Zur Erzeugung der zum Anionenaustausch befähigten ionischen Gruppen werden diese Polymere mit entsprechenden Monomeren, z.B. mit Trialkylamin oder multifunktionellen Aminen umgesetzt. Geeignete multifunktionelle Amine sind z.B. Diethylentriamin oder Tetraethylenpentamin.

Als Trägerpolymer eignen sich auch Polyvinylchloridfolien, die entsprechend durch Umsetzung mit Aminen modifiziert werden.

Als Anode können ebenfalls die aus dem Stand der Technik an sich bekannten und in der Literatur beschriebenen Anoden für Methanol/Luft-Brennstoffzellen eingesetzt werden. Derzeit sind noch keine Elektroden erhältlich, in denen auf Edelmetalle als Katalysator zur Oxidation des Wasserstoffs ganz verzichtet werden kann.

Als Katalysator eignen sich insbesondere bimetallische Katalysatoren auf Basis Platin/Ruthenium oder Platin/Zinn, die gegenüber reinen Platinkatalysatoren eine höhere Aktivität aufweisen und zu niedrigeren Überspannungen führen.

Verfahren zur Herstellung solcher Anoden sind an sich bekannt und in der Literatur beschrieben (beispielsweise in J. Electroanal. Chem. 179 (1984), 303 oder l.c. 199 (1986), 311.

Anoden mit besonders hoher Aktivität erhält man, wenn man Ruß mit hohen spezifischen Oberflächen im Bereich von 100 bis 400 m²/g als Träger für den Katalysator verwendet.

Im Gegensatz zu den bekannten Kationenaustauscher-Membranen als Festelektrolyt erfolgt der Stromtransport in den beschriebenen Methanol/Luft-Brennstoffzellen durch Wanderung der Hydroxyl-Ionen, die an der Kathode gebildet werden, zur Anode. Die Hydroxyl-Ionen nehmen bei ihrer Wanderung eine Solvathülle aus Wassermolekülen in den Anodenraum mit. Auf der Kathodenseite wird das Wasser ständig mit dem Luftstrom, der an der Kathode vorbeigeführt wird, entfernt. Dies hat zur Folge, daß von der Anodenseite zur Kathodenseite ein Konzentrationsgradient an Wasser aufgebaut wird, der dadurch ausgeglichen wird, daß Wasser von der Anodenseite zur Kathodenseite wandert. Dadurch wird der Verlust auf der Kathodenseite ausgeglichen und man erhält einen gleichmäßigen Wassergehalt auf Kathoden- und Anodenseite, wodurch zusätzliche Maßnahmen zur Befeuchtung der Membran auf einer Elektrodenseite überflüssig werden.

Die Hydrogencarbonationen und/oder an der Anode gebildetes $CO_2$ wandern aufgrund des Konzentrationsgefälles und des elektrostatischen Felds innerhalb der Anionenaustauscher-Membran von der Anode zur Kathode, wo die Hydrogencarbonationen infolge des dort vorliegenden geringen Kohlendioxid-Partialdrucks zu Hydroxyl-Ionen und Kohlendioxid disoziieren.

Das Kohlendioxid wird gasförmig mit dem an der Kathode vorbeigeführten Luftstrom entfernt.

Mit der Entwicklung derartiger neuer Brennstoffzellen mit hoher Energie- und Leistungsdichte treten Probleme auf, die bisher in der Technologie der Brennstoffzellen keine besonders hohe Priorität hatten. Als Folge der Erhöhung der Stromdichte von bisher um 0,2 A/cm² auf ca. 1 A/cm² müssen heute konstruktive Maßnahmen zur möglichst verlustarmen Ableitung der Ströme aus den Elektroden getroffen werden. Da pro Zelle nur eine Spannung von 1 V abgegeben wird, ist eine Batterie aus Brennstoffzellen dadurch charakterisiert, daß sie bei niedriger Spannung, je nach Zellenzahl, eine hohe Stromstärke abgibt. Dies bedingt hohe Leiterquerschnitte, um den Spannungsabfall niedrig zu halten. Aus Gründen der Verlegbarkeit der Leiter und weil hohe Ströme bei niedrigen Spannungen für die meisten Verbraucher ungünstig sind und die Regelbarkeit ebenfalls Schwierigkeiten bereitet, sollte eine Brennstoffzellenbatterie niedrige Ströme bei hohen Spannungen abgeben. Vorteilhafte Arbeitsspannungen sind solche, die der Spitzenspannung einer genormten effektiven Wechselspannung entsprechen.

So wäre es beispielsweise wünschenswert, eine Brennstoffzellenbatterie mit einer Ausgangsspannung von 310 bis 320 V versehen, um diese Gleichspannung über eine Halbleiterschaltung in eine Wechselspannung von 220 V umsetzen zu können, wobei ein teurer und schwerer Transformator überflüssig wäre.

Zur Erzielung hoher Leistungs- und Energiedichten sollte das Volumen optimal ausgenutzt werden, und als Grundlage eines akzeptablen Preises sollten Brennstoffzellenbatterien aus nur wenig verschiedenen in Massenfertigungsverfahren herstellbaren Einzelteilen bestehen.

Nach dem Stand der Technik werden die Elektroden von Brennstoffzellen in flacher Form als Rechteck oder Scheibe ausgeführt und diese Elektroden in rechteckigen oder zylindrischen Kammern angeordnet.

Für Brennstoffzellen, die mit Zirkonoxid als festem Elektrolyten und keramisch/metallischen Elektroden arbeiten, wurden zylindrische Zellen und deren Anordnung zu zylindrischen Batterien vorgeschlagen (s. Chemistry and Industry, Oct. 6, 1986, Seite 651). Je nach Durchmesser der Elektroden, meist um 10 mm, werden bereits bei Leistungen von 0,2 Watt pro cm² Elektrodenoberfläche Leistungen größer als 1 kW pro Liter Batterievolumen erzielt. Da der Elektrolyt auch als Dichtung dient, werden Abdichtungsschwierigkeiten weitgehend vermieden.

Nachteilig für derartige Brennstoffzellen ist, daß sowohl die katalytische Aktivität der Elektroden als auch die Ionenleitfähigkeit des Elektrolyten sehr hohe Temperaturen erfordern. Deshalb müssen solche Zellen bei Temperaturen um 1.000 °C arbeiten. Die Materialien für Elektroden und Elektrolyt sind temperaturstabile anorganische Stoffe, die durch CVD-Techniken (chemical vapour deposition) auf einem porösen Trägerrohr, durch das Luft oder der Brennstoff zugeführt wird, abgeschieden werden.

Dabei werden die einzelnen Stoffe, oder, bei ungenügender thermischer Stabilität, ihre Ausgangsverbindungen, bei sehr hoher Temperatur verdampft und bei ebenfalls hohen Temperaturen auf dem Substrat, in diesem Fall dem porösen Zuführungsrohr, abgeschieden.

Dieses Herstellverfahren ist für die beschriebenen Brennstoffzellen mit ihrer speziellen Katalysatormorphologie und ihrer Komponenten aus organischen Polymeren wegen deren Stabilitätsverlust bei Temperaturen oberhalb 200°C nicht durchführbar. Dementsprechend kann die damit erreichbare Zellen- und Batteriekonstruktion ebenfalls nicht hergestellt werden.

Es war daher Aufgabe der Erfindung, eine Batterie aus Methanol/Luft-Brennstoffzellen mit polymerem Elektrolyten in einer optimalen zylindrischen Konfiguration zu gestalten, mit dem Ziel einer hohen Energiedichte, geringer ohmscher Verluste, robuster und zuverlässiger Konstruktion basierend auf Einzelteilen, die wirtschaftlich in Massenfertigungsverfahren herstellbar sind und einer guten Reparaturmöglichkeit.

Die Lösung dieser Aufgabe erfolgt erfindungsgemäß durch eine Batterie aus Methanol/Luft-Brennstoffzellen der auf Anspruch 1 definierten. Weitere Ausgestaltungen der Erfindung sind Gegenstand der Unteransprüche.

Das wichtigste charakteristische Merkmal der Erfindung besteht darin, daß sich Anode und Kathode einer Brennstoffzelle auf einem gemeinsamen Stromableiter befinden, der als Kegel mit geringem Öffnungswinkel ausgebildet ist und mehrere Kegel auf einem Führungsrohr zu einer Batterie ineinandergesteckt werden. Die elektrisch leitende Verbindung zwischen den Stromableitern besteht aus der Anionenaustauscher-Membran, die gleichzeitig als Sperre für das Methanol dient und so die Kathode vom Methanol abdichtet. In einer bevorzugten Anordnung wird das Methanol durch das Rohr zugeführt und die Luft außen an den Kathoden vorbeigeführt. Mehrere der rohrförmigen Brennstoffzellenbatterien werden in einem gemeinsamen Gehäuse befestigt und durch ein Gebläse die benötigte Luft durchgeblasen. Das Methanol wird jedem Führungsrohr getrennt zugeführt. Damit ergibt sich die Möglichkeit, im Fall des Versagens das betreffende Rohr von der Methanol-Versorgung abzutrennen und das dann funktionslose Batterieelement zu überbrücken. In diesem Fall wird die Leistung einer aus vielen Einzelbatterien bestehenden Brennstoffzellenbatterie nur geringfügig reduziert, und es braucht nicht die ganze Batterie ersetzt zu werden.

Grundsätzlich ist es auch möglich, die Luft durch das Rohrinnere zu führen und das Rohr mit Methanol zu umgeben. Für diese Ausführung müßten die Kathoden innen und die Anoden außen angeordnet sein. Bei dieser Anordnung ist es jedoch nicht möglich, einzelne Rohre im Bedarfsfall von der Methanolversorgung abzutrennen. Außerdem wird wegen der gegenüber der bevorzugten Anordnung bestehenden geringeren Strömungsquerschnitte ein erhöhter Luftdruck bei der Luftversorgung benötigt.

Bedingt durch die erfindungsgemäße Konstruktion, nach der die einzelnen Brennstoffbatterierohre an einer Gehäusewand über eine einzige Mutter verschraubt sind, ist der Ersatz eines defektern Rohres nach Öffnen des Gehäuses ohne besonderen Aufwand zu bewerkstelligen und damit eine besonders gute Reparaturmöglichkeit gegeben.

Die Anschlüsse der Einzelbatterien können innerhalb oder außerhalb des Gehäuses beliebig verschaltet werden, um die gewünschten Strom- und Spannungswerte zu erhalten. Bei der Verschaltung außerhalb des Gehäuses müssen zwar die Stromdurchführungen durch die Gehäusewand verlegt werden, es eröffnet sich jedoch damit die Möglichkeit, die Leistung einzelner Batterierohre ohne Aufwand in zeitlichen Abständen zu überprüfen.

In den Zeichnungen ist ein Ausführungsbeispiel der Erfindung schematisch dargestellt und im folgenden näher erläutert:

Sie zeigen

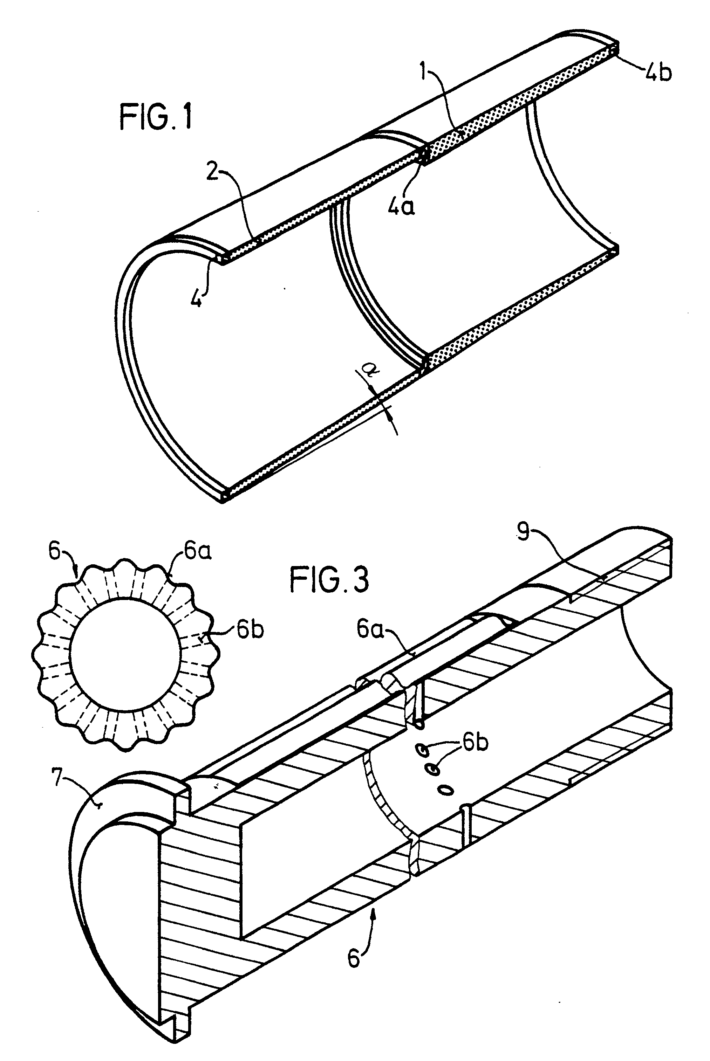

Figur 1: Einzelnes Brennstoffzellenelement

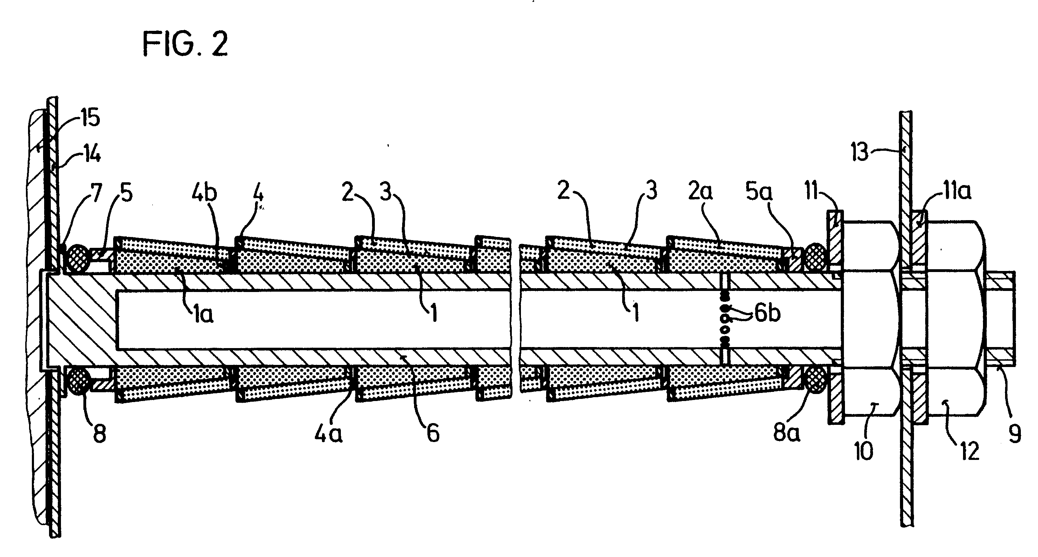

Figur 2: Anordnung der Brennstoffzellenelemente zu einer rohrförmigen Batterie
Figur 3: Quer- und Längsschnitt eines Führungsrohrs

Das Einzelelement für Brennstoffzellbatterien nach der Erfindung besteht aus dem Ableiter, der zusammen mit den entsprechenden Katalysatoren die Anode 1 und die Kathode 2 ausbildet. Er hat die Form eines stumpfen Kegels, der innen abgestuft ist. Der halbe Öffnungswinkel $\alpha$ beträgt 1-10°. Der Basisdurchmesser beträgt 8 bis 30 mm, vorzugsweise 10 bis 20 mm und entspricht dem Außendurchmesser des Führungsrohres 6. Die Ableiterlänge beträgt 20 bis 100 mm, vorzugsweise 30 bis 60 mm. Der Ableiter besteht aus einem gelochten Kupferblech oder einem Kupferdrahtnetz, das zur mechanischen Verstärkung an den Öffnungen und in der Mitte ungelochte Ringe 4 aufweist. Die Stärke des Ableiters beträgt am Ort der Kathode 2 konstant 0,3 bis 2 mm, vorzugsweise 0,5 bis 1 mm und an der anodenseitigen Öffnung 4b ebenfalls 0,3 bis 2 mm, vorzugsweise 0,5 bis 1 mm, wobei sich die Stärke von der Öffnung bis zur Mitte 4a hin verdoppelt.

Die Herstellung eines solchen Ableiters ist Stand der Technik. Die einzelnen Schritte beinhalten das Ausstanzen der Teile aus einem gelochten Kupferblech oder Kupfernetz, das automatische Anschweißen der Flächen für die Ringe 4, das Biegen zu Zylindern, das Verschweißen der Längsnaht und das Drücken in einer entsprechenden Form zu den gewünschten Endmaßen. Anschließend werden die Ableiter gegebenenfalls vernickelt.

Zum Einbringen der aktiven Katalysatormassen wird zunächst der Anodenkatalysator, der aus leitfähigem Ruß, dotiert mit dem eigentlichen bimetallischen Katalysator, und Polytetrafluorethylenpulver besteht, in einer Mischung aus Wasser und Methanol aufgeschlämmt und die Aufschlämmung zwischen den Ringen 4a und 4b in den Ableiter eingebracht.

In gleicher Weise wird zwischen den Ringen 4 und 4a eine Aufschlämmung aus leitfähigem Ruß und Polytetrafluorethylerpulver eingebracht. Danach wird das Teil getrocknet und in einer Form die Katalysatormasse bei ca. 350°C unter einem Druck um 50 N/cm² gesintert.

Anschließend wird die Kathode 2 mit einer Lösung des polymeren Katalysators getränkt und das Lösungsmittel durch Erhitzen entfernt. Die zwischen den Ringen 4a und 4b befindliche Anode 1 wird am äußeren Umfang mit Methanol getränkt und danach ebenfalls am äußeren Umfang mit einer viskosen Lösung oder Dispersion des Ionenaustauscher-Polymeren 3 beschichtet und auf diese Weise das Polymere aufgebracht. Es ist auch möglich, bereits fertige Filme des Ionenaustauscher-Polymeren 3 auf die Anode 1 aufzubringen, wobei der Ring 4b ebenfalls bedeckt wird. Da das Ionenaustauscher-Polymere 3 in seiner Dichtungsfunktion auch das Methanol von der Kathode 2 fernzuhalten hat, wird bei der Beschichtung der Anode 1 mit der Lösung oder Dispersion des Ionenaustauscher-Polymeren 3 der Ring 4b ebenfalls mit beschichtet und so die Dichtfunktion sichergestellt. Außerdem wird mit dieser Beschichtung erreicht, daß zwischen den einzelnen Ableiterelementen keine metallische Verbindung besteht, und die elektrische Leitfähigkeit zwischen den einzelnen Ableiterelementen nur durch die ionische Leitfähigkeit des Ionenaustauscher-Polymeren 3 zustande kommt.

Das Zuführungsrohr 6 dient zur Methanolzufuhr und dem mechanischen Zusammenhalt des Batterieaufbaus. Es gibt über die Länge, über die es mit Anoden 1 bedeckt ist, Methanol zu deren Versorgung ab. Dazu kann das betreffende Rohrstück aus methanoldurchlässigem Sintermetall bestehen, das an seiner Oberfläche eine isolierende poröse Schicht trägt.

Es ist auch möglich, ein Rohrstück aus gesintertem Glas oder poröser gesinterter Keramik zu verwenden. Am Anfang trägt das Rohr ein Außengewinde 9 zur Aufnahme der Befestigungselemente, am Ende einen Anschlag 7 zur Aufnahme der Spannkraft.

In einer bevorzugten Ausführung wird als Rohrmaterial ein inerter Kunststoff wie Polyethylen hoher Dichte oder Polypropylen verwendet. Die eingesetzten Kunststoffe können zur Erhöhung von Steifigkeit und Festigkeit verstärkende Füllstoffe wie Talkum, Kreide, Wollastonit und/oder Glasfasern enthalten. Über die Länge der Kathoden wird eine Längsriffelung 6a mit einer Tiefe um 1 mm eingeprägt, die mit Bohrungen 6b mit Methanol vom Rohrinneren versorgt wird. Die Kunststoffausführung hat neben dem geringen Gewicht und der Flexibilität den Vorteil, daß die Längsriffelung 6a, der Anschlag 7 und das Gewinde 9 durch Thermoformen in einem einzigen Arbeitsgang aufgebracht werden können. Je nach erforderlicher Leistung beträgt die aktive Rohrlänge (Länge der Riffelung) 100 bis 500 mm.

Zur Montage einer erfindungsgemäßen Brennstoffzellenbatterie wird zunächst ein O-Ring 8 bis zum Anschlag 7 geschoben. Darauf folgt der Abschlußring 5, der mit einer einzelnen Anode 1a verbunden ist. Vom Abschlußring 5 wird der Strom nach außen abgeführt. Nun werden nacheinander die folgenden, wie beschrieben präparierten, Einzelelemente aufgesteckt. Den Abschluß bildet der Ring 5a, der eine einzelne Kathode 2a trägt und von dem der Strom nach außen geleitet wird. Der O-Ring 8a dichtet Methanol nach außen ab. Er wird mit der Mutter 10 über den Ring 11 angepreßt. Mit der Mutter 10 wird der normalerweise geringe Andruck für die Einzelelemente aufgebracht. Die Konstruktion erlaubt eine bequeme Einlochmontage an einer Seitenwand 14 des Gehäuses. Dazu wird das Rohr mittels der Mutter 12 über den Ring 11a fixiert. Zur Erhöhung der mechanischen Stabilität werden die Batterierohre in passenden Bohrungen der gegenüberliegenden Seitenwand 14 fixiert. Die Abdeckung 15 schließt die Batterie von Umwelteinflüssen ab.

Beispielhaft sind die wesentlichsten Abmessungen für eine Brennstoffzellenbatterie mit ca. 50 bis 60 kW Leistung aufgeführt (ohne Gebläse):

Ein einzelnes Brennstoffzellenelement ist 40 mm lang, die Stärke der Kathode beträgt 0,5 mm, die Stärke der Anode 0,5 bis 1,0 mm sich erweiternd. Der Basisdurchmesser beträgt 10 mm, der halbe Öffnungswinkel ca. 2°. Die aktive Länge des Führungsrohres aus verstärktem Polypropylen mit 9,9 mm Außendurchmesser beträgt 300 mm. Auf ein Rohr sind 7 Elemente aufgereiht, die incl. der Endelemente 15 Brennstoffzellen pro Rohr ergeben. Bei einer Flächenleistung von 1 Watt/cm² ergibt dies eine Leistung von rund 90 Watt pro Rohr. In ein Gehäuse mit je 450 mm Breite und Höhe und 320 mm Tiefe werden 625 dieser Rohre in gleichen Abständen von 18 mm von Rohrmitte zu Rohrmitte eingebaut. Diese Brennstoffzellenbatterie liefert 56 kW bei einem Volumen von 65 Litern, also ca. 860 W/Liter.

**Ansprüche**

1. Batterie aus Methanol/Luft-Brennstoffzellen, die ihrerseits aus einer Anode (1), einer Kathode (2) und einer CO₂ -permeablen Anionenaustauscher-Membran (3) als Elektrolyt aufgebaut ist, bei der

a) sich die Anode (1) und die Kathode (2) auf einem gemeinsamen Stromableiter befinden,

b) der Stromableiter als stumpfer, mittig innen abgestufter Kegel ausgebildet ist,

c) zwischen der Abstufung und dem einen Rand des Stromableiters die Katalysatormasse der Kathode (2) und zwischen der Abstufung und dem anderen Rand des Stromableiters die Katalysatormasse der Anode (1) eingebracht wird,

d) die Anode (1) an ihrem äußeren Umfang mit einem Ionenaustauscher-Polymeren (3) beschichtet wird, sodaß beim Einstecken der Kegel ineinander die Zonenaustauscher-Membran (3) sich zwischen der Anode (1) und der Kathode (2) befindet und das Methanol von der Kathode (2) ferngehalten wird, und

e) mehrere der Stromableiter auf einem Führungsrohr (6) zu einer Batterie ineinandergesteckt werden.

2. Batterie nach Anspruch 1, dadurch gekennzeichnet, daß das Führungsrohr (6) aus einem Kunststoff besteht und Längsrillen (6a) aufweist, die über Bohrungen (6b) aus dem Rohrinneren mit Methanol versorgt werden.

3. Batterie nach den Ansprüchen 1 und 2, dadurch gekennzeichnet, daß mehrere rohrförmige Batterien in einem gemeinsamen Gehäuse angeordnet werden.

## Claims

1. A battery comprising methanol/air fuel cells which in turn are composed of an anode (1), a cathode (2) and a $CO_2$-permeable anion exchanger membrane (3) as electrolyte, wherein

a) the anode (1) and the cathode (2) are present on a common current offlead,

b) the current offlead is configured as a truncated cone having central internal stepping,

c) the catalyst material of cathode (2) is introduced between the stepping and one edge of the current offlead and the catalyst material of anode (1) is introduced between the stepping and the other edge of the current offlead,

d) the anode (1) is coated on its outer circumference with an ion exchanger polymer (3), so that on pushing the cones into one another the ion exchanger membrane (3) is between the anode (1) and the cathode (2) and the methanol is kept away from the cathode (2), and

e) a plurality of the current offleads are placed one inside the other on a feed tube (6) to form a battery.

2. A battery as claimed in claim 1, wherein the feed tube (6) consists of a plastics material and has longitudinal flutes (6a) which are supplied with methanol from inside the tube via holes (6b).

3. A battery as claimed in claims 1 and 2, wherein a plurality of tubular batteries are arranged in a common housing.

## Revendications

1. Batterie de cellules de combustible méthanol/air qui, à leur tour, sont formées, d'une anode (1), une cathode (2) et comme électrolyte d'une membrane (3) échangeuse d'anions, perméable à $CO_2$, dans laquelle

a) l'anode (1) et la cathode (2) se trouvent sur un conducteur commun.

b) le conducteur est en forme de cône tronqué à étagement intérieur central

c) entre la partie étagée et un des bords du conducteur est introduite la masse catalytique de la cathode (2) et, entre la partie étagée et l'autre bord du conducteur est introduite la masse catalytique de l'anode (1)

d) l'anode (1) est enduite, sur sa périphérie extérieure d'un polymère (3), échangeur d'ions, de sorte que, lors de l'emmanchement des cônes les uns dans les autres, la membrane échangeuse d'ions (3) se trouve entre l'anode (1) et la cathode (2) et le méthanol est maintenu écarté de la cathode (2), et

e) plusieurs des conducteurs sont emmanchés les uns dans les autres sur un tube de guidage (6) pour former une batterie.

2. Batterie selon la revendication 1, caractérisée par le fait que le tube de guidage (6) est en matière plastique et présente des rainures longitudinales (6a) dans lesquelles arrive, par des trous (6b), le méthanol venant de l'intérieur du tube.

3. Batterie selon les revendications 1 et 2, caractérisée par le fait que plusieurs batteries tubulaires sont disposées dans un bâti commun.

FIG.1

FIG.3

# FIG. 2

EP 0 270 894 B1